# FASCICULE DE BREVET EUROPEEN

(11) **EP 2 417 654 B1**
(45) Date de publication et mention de la délivrance du brevet: **18.09.2013**
(21) Numéro de dépôt: 10709748.7
(22) Date de dépôt: 23.03.2010
(51) Int. Cl.: H01M 4/04, H01M 4/14, H01M 4/20, H01M 4/22, H01M 4/38, H01M 4/56, H01M 4/66, H01M 4/68, H01M 4/73, H01M 4/80, H01M 4/82, H01M 10/12

(54) **ELECTRODE DE BATTERIE ACIDE-PLOMB COMPORTANT UN RESEAU DE PORES TRAVERSANTS ET PROCEDE DE FABRICATION**
BLEI-SÄURE-AKKUMULATORELEKTRODE MIT EINEM OFFENEN PORENSYSTEM UND HERSTELLUNGSVERFAHREN
ACID-LEAD BATTERY ELECTRODE COMPRISING A NETWORK OF PORES PASSING THERETHROUGH, AND PRODUCTION METHOD

(30) Priorité: 06.04.2009 FR 0901666
(43) Date de publication de la demande: 15.02.2012
(73) Titulaire: Commissariat à l'Énergie Atomique et aux Énergies Alternatives, 75015 Paris (FR)
(72) Inventeur: KIRCHEV, Angel Zhivkov, F-73100 Aix-les-Bains (FR); KIRCHEVA, Nina, F-73100 Aix-les-Bains (FR)
(74) Mandataire: Talbot, Alexandre
(86) Numéro de dépôt international: PCT/EP2010/053771
(87) Numéro de publication internationale: WO 2010/115705

(56) Documents cités:
- EP-A2- 0 856 900
- WO-A1-2006/105188
- US-A- 3 825 460
- US-A1- 2005 191 555
- US-A1- 2006 292 448
- GYENGE E ET AL: "Electroplated reticulated vitreous carbon current collectors for lead-acid batteries: opportunities and challenges" JOURNAL OF POWER SOURCES, ELSEVIER SA, CH, vol. 113, no. 2, 27 janvier 2003 (2003-01-27), pages 388-395, XP004402934 ISSN: 0378-7753

## Description

### Domaine technique de l'invention

L'invention concerne une électrode de batterie acide-plomb comportant au moins une structure poreuse à base de carbone avec des faces principales parallèles et des faces latérales entourées par une armature externe, la structure poreuse, recouverte d'une couche en plomb ou en alliage à base de plomb, étant remplie d'une pâte à base de plomb.

L'invention concerne également un procédé de fabrication d'une telle électrode.

### État de la technique

Les batteries acide-plomb sont généralement constituées d'un empilement de cellules électrochimiques. Chaque cellule comporte deux électrodes comprenant chacune un collecteur de courant poreux, également appelé grille, et un matériau actif à base de plomb ou de dioxyde de plomb, ainsi qu'un électrolyte à base d'acide sulfurique.

Le principal problème des batteries acide-plomb est leur faible densité d'énergie. Dans le cas des batteries acide-plomb à valve (« Valve Regulated Lead-Acid Batteries » ou VRLAB), la densité d'énergie est de 30 à 40 Wh/kg, alors que la valeur théorique de ce type de batterie est de 167 Wh/kg. Deux raisons expliquent la différence entre la valeur théorique et la valeur réelle de la densité d'énergie. Premièrement, les collecteurs de courant de la batterie, qui servent également de supports mécaniques aux matériaux actifs (pâte à base de plomb poreux et pâte à base d'oxyde de plomb poreux) sont en général en plomb (métallique), ce qui augmente considérablement le poids d'une telle batterie. Deuxièmement, le coefficient d'utilisation d'un matériau actif, qui représente la part du matériau actif qui réagit électrochimiquement, est faible. Il varie entre 40 à 50% selon le type de matériau employé pour le collecteur de courant positif ou le collecteur de courant négatif et selon la géométrie employée (collecteurs sous forme de plaques, tubulaires, plans ou bipolaires). Deux phénomènes limitent en général l'efficacité des matériaux actifs :
- pendant la décharge de la batterie, une part du matériau actif subit un phénomène de sulfatation, ce qui augmente de manière significative la résistance ohmique du matériau actif employé et diminue l'utilisation du matériau non sulfaté. Une étude de ce phénomène est par exemple reportée dans l'article « The use of titanium in the lead-acid batteries » (Power Sources 4, ed. D.H. Collins, 1973, pp. 525-538) de Faber pour un collecteur de courant en titane et du dioxyde de plomb utilisé comme matériau actif positif.
- la décharge consomme l'électrolyte. L'électrolyte entre dans l'espace situé entre les deux électrodes de la cellule et s'infiltre dans les pores des collecteurs de courant. Ainsi, les parties du matériau actif situées loin de la surface des collecteurs de courant ne reçoivent pas d'électrolyte et ne participent pas aux réactions, comme cela est décrit par Bode, dans l'article « Lead-Acid Batteries » (John Wiley & Sons, 1977, pp.156-159).

La comparaison de ces deux phénomènes limitant l'utilisation du matériau actif indique donc que la géométrie des collecteurs de courant, en général sous forme d'une grille, est le principal facteur limitant les performances de la batterie.

Le brevet US7060391 propose de remplacer les collecteurs de courant traditionnels en plomb par des collecteurs en carbone très poreux, afin d'améliorer la densité d'énergie de la batterie. Ces collecteurs sont constitués de mousses en carbone telles que les carbones vitreux réticulés également appelés « RVC » ( « Reticulated Vitreous Carbon » ). Les pores de ces mousses sont remplis de matériaux actifs permettant les réactions chimiques. La taille des pores étant inférieure à 1mm, ceci permet d'obtenir un coefficient d'utilisation allant jusqu'à 70% à 80%. Malgré cet avantage, l'utilisation de ces mousses reste limitée en raison des problèmes suivants :
- la grande porosité de ces mousses (95% de vide) augmente grandement la résistante électrique. Les solutions qui ajoutent une armature et un connecteur en plomb autour de la mousse pour collecter le courant augmentent le poids de l'électrode et diminuent ainsi la densité d'énergie de la batterie. De plus, ces procédés sont couteux car ils requièrent des équipements spécifiques.
- la structure irrégulière de la mousse rend difficile l'étape d'étalement de la pâte de matériau actif. Une pâte disposée de manière inhomogène dans les pores de la mousse réduit l'utilisation du matériau actif et l'espérance de vie de la batterie.

De plus, pendant un cycle de charge-décharge, et spécialement lors d'un cycle de décharge profonde, le volume des électrodes varie grandement en raison de la différence des volumes molaires du sulfate de plomb et du plomb/dioxyde de plomb. Les contraintes mécaniques engendrées causent la dégradation progressive de la batterie, en particulier du matériau actif de l'électrode positive. En effet, celui-ci se désagrège et se détache de la grille. Ce problème est résolu en utilisant des séparateurs en fibres de verre microporeux également connus sous le sigle AGM ( « Absorptive Glass Mat » ). Une feuille de type AGM est solidement maintenue entre les deux électrodes exerçant une force de compression sur celles-ci. Cette compression empêche la dégradation du matériau actif causée par le changement de volume et augmente la durée de vie de la batterie, comme cela a été démontré par Takahashi et al. ( « Physical Changes in Positive Active Mass during Deep Discharge-Charge Cycles of Lead-Acid Cell » , J. Electrochem. Soc., Vol. 130, pp. 2144-2149, 1983). Cependant, cette technologie n'est pas applicable aux collecteurs de courant en mousses de carbone, telles que les RVC ou carbone/graphite, puisque la compression provoquerait une cassure du matériau. Or, en l'absence de séparateurs de type AGM, les mousses de carbone ont une durée de vie courte.

### Objet de l'invention

L'invention a pour but une électrode pour batterie acide-plomb comportant au moins une structure poreuse à base de carbone avec des faces principales parallèles et des faces latérales entourées par une armature externe et la structure poreuse, recouverte d'une couche en plomb ou en alliage à base de plomb, étant remplie d'une pâte à base de plomb, et remédiant aux inconvénients de l'art antérieur. Plus particulièrement, l'invention a pour but une électrode compacte, légère, solide et facile à réaliser, permettant la fabrication de batteries de forte densité énergétique.

Selon l'invention, ce but est atteint par le fait que la structure comporte un réseau ordonné de pores traversants, homogènes et perpendiculaires audites faces principales et par le fait que l'armature externe est à base de carbone et recouverte d'une couche en plomb ou en alliage à base de plomb.

L'invention a également pour but un procédé de fabrication d'une telle électrode, facile à mettre en oeuvre.

Ce but est atteint par le fait que le procédé comporte successivement :
- la réalisation d'un support provisoire comportant ledit réseau ordonné de pores, imprégné d'au moins une première résine thermodurcissable à base de carbone,
- la formation de l'armature externe autour dudit support provisoire, par moulage à l'aide d'un mélange comprenant au moins une seconde résine thermodurcissable à base de carbone, et durcissement dudit mélange,
- le découpage en tranches de l'ensemble formé par le support provisoire entouré de l'armature externe,
- le traitement thermique en atmosphère inerte dudit ensemble, carbonisant les matériaux de l'ensemble,
- le dépôt d'une couche en plomb ou en alliage à base de plomb sur toutes les surfaces de l'ensemble,
- le remplissage à l'aide d'une pâte à base de plomb constituant le matériau actif de la batterie, des pores de la structure poreuse obtenue après le traitement thermique.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente un mode particulier de réalisation d'une électrode de batterie acide-plomb selon l'invention.
- les figures 2 et 3 représentent différentes étapes d'un procédé de fabrication d'électrodes selon la figure 1.
- la figure 4 représente une variante de réalisation d'une électrode selon l'invention.
- la figure 5 représente un empilement de séparateurs de type AGM et d'une électrode selon l'invention

### Description de modes particuliers de réalisation

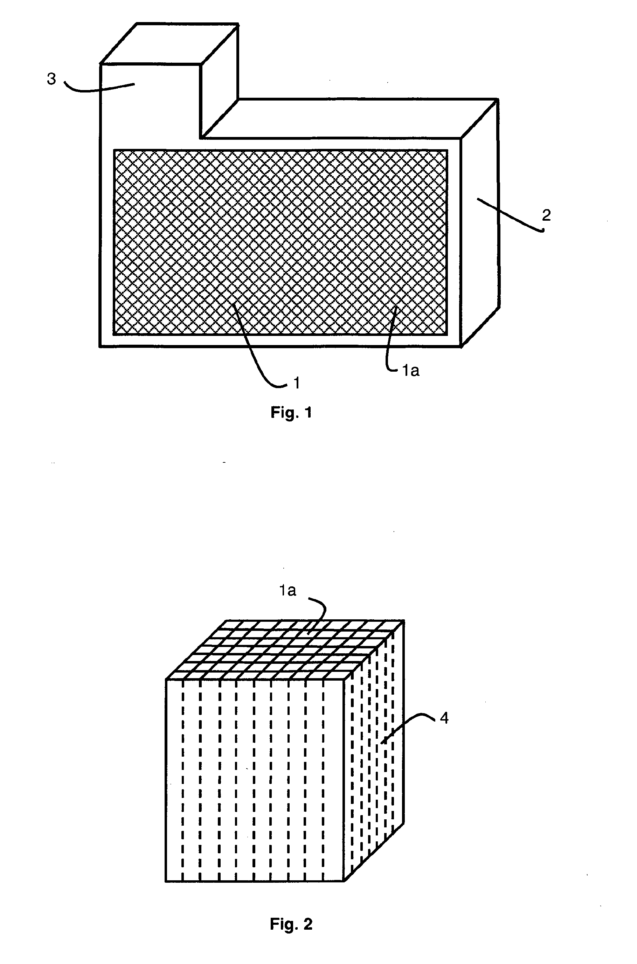

La figure 1 représente un mode particulier de réalisation d'une électrode pour batterie acide-plomb selon l'invention. L'électrode comporte une structure 1 munie d'un réseau de pores 1a traversant d'une face principale à l'autre. Les pores 1a sont perpendiculaires aux faces principales de la grille. Ils sont, de préférence, tous identiques et séparés par des parois fines, faiblement poreuses (porosité : 5-10%). La section transversale de chaque pore 1 a peut être de tout type : circulaire, hexagonal, carré, rectangulaire... De plus, une pâte à base de plomb destinée à former le matériau actif associé à ladite électrode remplit les pores 1 a de la structure 1. Le réseau ainsi formé est, de préférence, un réseau régulier, par exemple sous forme de nid d'abeille.

Les faces latérales de la structure 1 sont, de plus, recouvertes d'une armature externe 2, qui est avantageusement massive c'est-à-dire compacte et la moins poreuse possible. L'armature externe 2 entourant la structure 1 comporte, en particulier sur la figure 1, un élément de connexion 3, formé par exemple par un élément en saillie. La structure 1 et l'armature externe 2 sont à base de carbone, de préférence, vitreux. Une telle électrode présente l'avantage d'être légère et solide. Un autre avantage de la structure poreuse de l'électrode selon l'invention est la remarquable surface active du collecteur de courant. Le rapport de la masse de matériau actif sur la surface du collecteur est grandement diminué avec cette grille, ce qui signifie que la durée de vie de ces électrodes est importante. Enfin, une électrode selon l'invention est surtout facile à réaliser.

Ainsi, l'électrode peut être réalisée au moyen d'un procédé de fabrication facile à mettre en oeuvre, utilisant un support provisoire. Des tubes, par exemple en papier, sont imprégnés d'au moins une résine thermodurcissable à base de carbone, puis arrangés pour former un support provisoire 4 imprégné, tel qu'illustré sur la figure 2. Le support provisoire 4 comporte un réseau de pores 1 a correspondant aux espaces délimités par les parois des tubes en papier. Ainsi, sur la figure 2, le support provisoire est constitué par un assemblage de section rectangulaire, formé par 70 tubes de section carrée tous identiques.

Par ailleurs, la résine utilisée pour imprégner le support provisoire 4 est une résine thermodurcissable à base de carbone. Elle est donc apte à être carbonisée, c'est-à-dire à être transformée en carbone par un traitement thermique adapté. La résine est, de préférence, une résine epoxy ou une résine à base de phénol-formaldéhyde. Avantageusement, il est possible d'utiliser des supports en papier imprégnés de résine disponibles dans le commerce. Ces supports sont peu chers. Avantageusement, les tubes employés peuvent avoir un diamètre ou un côté de 1 à 4mm et une paroi d'une épaisseur de l'ordre de 0,1 mm.

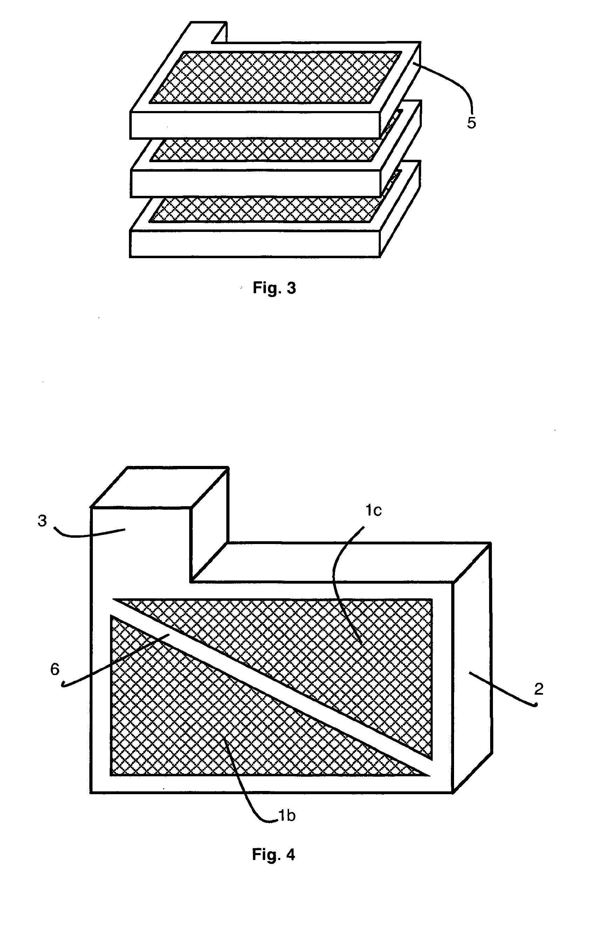

Le support provisoire 4 est ensuite placé dans un moule pour former l'armature externe 2 en utilisant un mélange comportant au moins une résine thermodurcissable à base de carbone. Avantageusement, le mélange comporte, de plus, du carbone et un solvant. Au préalable, les entrées-sorties des pores 1a sont avantageusement fermées afin d'empêcher l'entrée du mélange utilisé pour former l'armature externe 2, dans les pores. La fermeture est réalisée, par exemple, en collant une plaque aux extrémités des pores. La résine du mélange est, de préférence, la même que celle utilisée pour imprégner le support provisoire 4, ce qui simplifie grandement le procédé de fabrication. Le carbone du mélange peut, par exemple, être sous forme de fibres. La concentration des fibres de carbone varie alors, de préférence, de 1 à 10% en poids par rapport au poids de résine utilisée et celle du solvant varie alors de 5 à 15% en poids par rapport au poids de résine utilisée. Les fibres de carbone peuvent également être remplacées par des particules. Ces additifs permettent une carbonisation ultérieure rapide sans créer de défauts dans l'armature externe. Les résines sont ensuite durcies soit par la présence d'un agent durcisseur, soit par chauffage à 60°C, soit par les deux actions conjuguées. Le support 4 recouvert de son armature est ensuite sorti du moule, puis il est découpé en tranches à l'épaisseur désirée pour former des grilles 5 (fig. 3). La découpe est, par exemple, réalisée à l'aide d'une scie à bande ou tout équipement similaire.

Puis, les grilles 5 ainsi formées subissent un traitement thermique, dans une atmosphère inerte, à une température permettant la carbonisation des matériaux. Durant cette étape, la résine thermodurcissable à base de carbone de la structure 1 et celle du mélange utilisé pour l'armature 2 sont transformées en carbone, conducteur, ayant une excellente résistance chimique et mécanique. La température est avantageusement de l'ordre de 1000 à 1100°C et le carbone obtenu est, en particulier, du carbone vitreux.

Un dépôt de plomb ou d'un alliage à base de plomb doit recouvrir l'ensemble des grilles 5. La couche déposée sur chaque grille 5 est, de préférence, en plomb pur ou en alliage à base d'étain et de plomb (masse d'étain : 1,5 à 2% de la masse totale), selon le type d'électrode souhaité (positif ou négatif). De préférence, une électrode positive est recouverte d'un dépôt de plomb et d'étain de 100 à 200µm d'épaisseur et une électrode négative est recouverte d'un dépôt de plomb pur de 20 à 40µm d'épaisseur. Le dépôt assure une bonne adhésion du matériau actif, ainsi qu'une protection de la surface de carbone contre l'oxydation. Le dépôt est réalisé, de préférence, par électrodéposition, ce qui permet le dépôt sur de grandes surfaces et des dépôts non poreux. Puis, une étape d'empattage (ou « pasting » en anglais) est réalisée, permettant le remplissage des pores 1a de la grille 5 par un matériau actif adapté selon le type d'électrode souhaité (positif ou négatif). La pâte comporte au moins un mélange de plomb ou d'oxyde de plomb, d'acide sulfurique et d'eau. De préférence, l'épaisseur de la pâte à base de plomb est de 100 à 300µm. Les pores étant ordonnés et homogènes, la distribution du matériau actif dans les pores est également homogène. La structure 1, ordonnée, permet l'utilisation d'équipements usuels pour réaliser l'étape d'empattage. La pâte remplit aisément les pores 1a d'une taille (diamètre ou côté) de 1 à 4mm et la structure 1 offre une excellente rétention de la pâte. Avec une dimension de pores de 1 à 4mm et une épaisseur des parois de 0,1 à 0,5mm comprenant l'épaisseur du revêtement de l'alliage, le coefficient d'utilisation du matériau actif est de 70 à 80%.

La réalisation d'une structure poreuse en carbone à l'aide d'un support provisoire en papier imprégné de résine a déjà été décrite dans le brevet US3825460. Cependant, la structure en carbone décrite dans le brevet US3825460 ne serait pas utilisable directement en tant qu'électrode pour une batterie acide-plomb. En effet, la capacité de transport du courant sur le périmètre de cette structure n'est pas suffisante pour collecter tout le courant généré dans la structure. De plus, du fait du réseau ordonné de pores, la structure possède des propriétés mécaniques anisotropes. En effet, la structure est résistante aux forces de compression dans une direction parallèle aux pores traversants mais ne résisterait pas à un effort de flexion. Ainsi, une telle structure est selon l'invention consolidée par une armature externe, formée autour de ses faces latérales extérieures. Par ailleurs, cette armature présente l'avantage d'être en carbone, allégeant ainsi l'électrode, et d'être facile à réaliser. L'armature externe 2 a, de préférence, une section carrée de 2x2mm à 4x4mm, ce qui est suffisant pour assurer à la fois la résistance mécanique et une collecte efficace du courant.

Dans le mode de réalisation particulier représenté sur la figure 4, la structure 1 est, de préférence, divisée en structures élémentaires, 1b et 1c sur la figure 4, plus petites et séparées par une armature interne 6 à base de carbone. Ce mode de réalisation est avantageux dans le cas d'électrodes de grandes dimensions où la résistance ohmique au centre de la structure 1 peut limiter les performances de la cellule et le découpage en tranches peut occasionner des défauts physiques dans la structure. Dans de tels cas, le support provisoire 4 est alors, de préférence, divisé en plusieurs blocs. Des espaces sont laissés dans le moule entre les blocs, qui sont ensuite remplis par le même mélange que celui utilisé pour réaliser l'armature externe 2, afin de former l'armature interne 6.

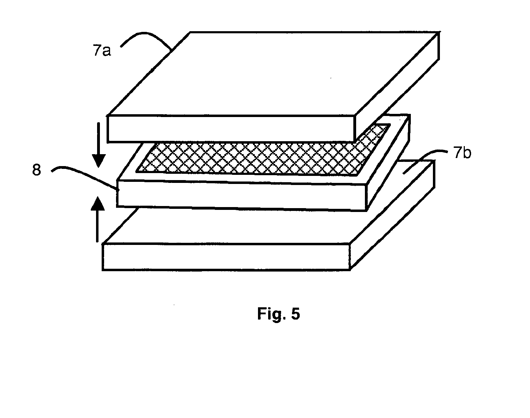

Une électrode selon l'invention décrite précédemment permet l'assemblage de cellules acide-plomb à valve (VRLA) et contrairement à l'art antérieur, de batteries avec des séparateurs de type AGM. La figure 5 illustre un assemblage d'une électrode 8 selon l'invention (par exemple celle de la figure 1) avec deux séparateurs de type AGM 7a et 7b. Ces derniers viennent exercer une compression sur l'électrode 8. Les parois des pores et celles des séparateurs 7a et 7b confinent le matériau actif et empêchent les changements de volume de celui-ci. De cette manière, l'interface entre la structure en carbone et le matériau actif reste intacte et le matériau actif conserve son intégralité.

## Revendications

1. Electrode (8) de batterie acide-plomb comportant au moins une structure poreuse (1) à base de carbone avec des faces principales parallèles et des faces latérales entourées par une armature externe (2), la structure poreuse (1), recouverte d'une couche en plomb ou en alliage à base de plomb, étant remplie d'une pâte à base de plomb, électrode (8) **caractérisée en ce que** :
- la structure poreuse (1) comporte un réseau ordonné de pores (1a) traversants, homogènes et perpendiculaires auxdites faces principales
- et l'armature externe (2) est à base de carbone et recouverte d'une couche en plomb ou en alliage à base de plomb.

2. Electrode (8) selon la revendication 1, **caractérisée en ce que** l'armature externe (2) est en carbone vitreux.

3. Electrode (8) selon l'une des revendications 1 et 2, **caractérisée en ce que** la structure poreuse (1) est en carbone vitreux.

4. Electrode (8) selon l'une quelconque des revendications 1 à 3, **caractérisée en ce que** le réseau de pores est sous forme de nid d'abeille.

5. Electrode (8) selon l'une quelconque des revendications 1 à 4, **caractérisée en ce que** les pores ont une taille de 1 à 4mm.

6. Electrode (8) selon l'une quelconque des revendications 1 à 5, **caractérisée en ce que** la structure est divisée en au moins deux parties (1 b, 1 c) par une armature interne (6), à base de carbone.

7. Procédé de fabrication d'une électrode (8) selon l'une quelconque des revendications 1 à 6, **caractérisé en ce qu'**il comporte successivement :
- la réalisation d'un support provisoire (4) comportant ledit réseau ordonné de pores (1 a), imprégné d'au moins une première résine thermodurcissable à base de carbone,
- la formation de l'armature externe (2) autour dudit support provisoire (4), par moulage à l'aide d'un mélange comprenant au moins une seconde résine thermodurcissable à base de carbone, et durcissement dudit mélange,
- le découpage en tranches de l'ensemble formé par le support provisoire (4) entouré de l'armature externe (2),
- le traitement thermique en atmosphère inerte dudit ensemble, carbonisant les matériaux de l'ensemble,
- le dépôt d'une couche en plomb ou en alliage à base de plomb sur toutes les surfaces de l'ensemble,
- le remplissage à l'aide d'une pâte à base de plomb constituant le matériau actif de la batterie, des pores (1a) de la structure poreuse (1 ; 1 b, 1 c) obtenue après le traitement thermique.

8. Procédé selon la revendication 7, **caractérisé en ce que** le support provisoire (4) est en papier.

9. Procédé selon l'une quelconque des revendications 7 et 8, **caractérisé en ce que** les première et seconde résines thermodurcissables à base de carbone sont identiques.

10. Procédé selon l'une quelconque des revendications 7 à 9, **caractérisé en ce que** le mélange comprend des fibres ou des particules de carbone, et un solvant.

11. Procédé selon l'une quelconque des revendications 7 à 10, **caractérisé en ce que** le dépôt de la couche en plomb ou en alliage à base de plomb est réalisé par électrodéposition.

## Patentansprüche

1. Elektrode (8) einer Blei-Säure-Batterie, die mindestens ein Porenstrukturteil (1) auf Kohlenstoffbasis mit parallel zueinander liegenden Hauptflächen und Seitentlächen, die von einer äußeren Bewehrung (2) umgeben sind, aufweist, wobei das Porenstrukturteil (1), das mit einer Schicht aus Blei oder aus einer Legierung auf Bleibasis überzogen ist, mit einer Paste auf Bleibasis gefüllt ist, **dadurch gekennzeichnet, dass** :
- das Porenstrukturteil (1) ein geordnetes Netzsystem von homogenen, offenen Poren (1a) aufweist, die im rechten Winkel zu den genannten Hauptflächen angeordnet sind, und
- die äußere Bewehrung (2) auf Kohlenstoffbasis ausgeführt ist und mit einer Schicht aus Blei oder aus einer Legierung auf Bleibasis überzogen ist.

2. Elektrode (8) nach Anspruch 1, **dadurch gekennzeichnet, dass** die äußere Bewehrung (2) aus glasartigem Kohlenstoff besteht.

3. Elektrode (8) nach einem der Ansprüche 1 und 2, **dadurch gekennzeichnet, dass** das Porenstrukturteil (1) aus glasartigem Kohlenstoff besteht.

4. Elektrode (8) nach einem der Ansprüche 1 bis 3, **dadurch gekennzeichnet, dass** das Poren-Netzsystem in Wabenform ausgeführt ist.

5. Elektrode (8) nach einem der Ansprüche 1 bis 4, **dadurch gekennzeichnet, dass** die Poren eine Größe von 1 bis 4 mm haben.

6. Elektrode (8) nach einem der Ansprüche 1 bis 5, **dadurch gekennzeichnet, dass** das Porenstrukturteil von einer inneren Bewehrung (6) auf Kohlenstoffbasis in mindestens zwei Teile (1b, 1c) geteilt ist.

7. Verfahren zur Herstellung einer Elektrode (8) nach einem der Ansprüche 1 bis 6, **dadurch gekennzeichnet, dass** es aufeinander folgend umfasst:
- die Herstellung eines provisorischen Trägers (4), der das genannte geordnete Netzsystem von Poren (1a) enthält, der mit mindestens einem ersten wärmehärtbaren Harz auf Kohlenstoffbasis imprägniert ist,
- die Bildung der äußeren Bewehrung (2) um diesen provisorischen Träger (4) herum durch Formung mittels eines Gemischs, das mindestens ein zweites wärmehärtbares Harz auf Kohlenstoffbasis enthält, und durch Härten dieses Gemischs,
- das In-Scheiben-Zerschneiden des von dem provisorischen Träger (4), der von der äußeren Bewehrung (2) umgeben ist, gebildeten Ganzen,
- die Wärmebehandlung des genannten Ganzen in einer gasförmigen Schutzhülle, wobei die Werkstoffe des Ganzen verkohlt werden,
- Aufbringen einer Schicht aus Blei oder aus einer Legierung auf Bleibasis auf alle Oberflächen des Ganzen,
- Füllen der Poren (1a) des nach der Wärmebehandlung erhaltenen Porenstrukturteils (1; 1b, 1c) mit einer Paste auf Bleibasis, die den aktiven Werkstoff der Batterie darstellt.

8. Verfahren nach Anspruch 7, **dadurch gekennzeichnet, dass** der provisorische Träger (4) aus Papier besteht.

9. Verfahren nach einem der Ansprüche 7 und 8, **dadurch gekennzeichnet, dass** das erste und das zweite wärmehärtbare Harz auf Kohlenstoffbasis identisch sind.

10. Verfahren nach einem der Ansprüche 7 bis 9, **dadurch gekennzeichnet, dass** das Gemisch Kohlenstofffasern oder -partikel sowie ein Lösungsmittel enthält.

11. Verfahren nach einem der Ansprüche 7 bis 10, **dadurch gekennzeichnet, dass** das Aufbringen der Schicht aus Blei oder aus einer Legierung auf Bleibasis durch Aufmetallisierung erfolgt.

## Claims

1. Electrode (8) for a lead-acid battery comprising at least one carbon-based porous structure (1) with parallel main faces and lateral faces surrounded by an outer frame (2), the porous structure (1), covered by a lead or lead-based alloy layer, being filled with a lead-based paste, electrode (8) **characterized in that**:
the porous structure (1) comprises an ordered network of homogeneous through-pores (1a) perpendicular to said main faces,
- the outer frame (2) is carbon-based and is covered by a lead or lead-based alloy layer.

2. Electrode (8) according to claim 1, **characterized in that** the outer frame (2) is made from vitreous carbon.

3. Electrode (8) according to one of claims 1 and 2, **characterized in that** the porous structure (1) is made from vitreous carbon.

4. Electrode (8) according to any one of claims 1 to 3, **characterized in that** the network of pores is in the form of a honeycomb.

5. Electrode (8) according to any one of claims 1 to 4, **characterized in that** the pores have a size of 1 to 4mm.

6. Electrode (8) according to any one of claims 1 to 5, **characterized in that** the structure is divided into at least two parts (1b, 1c) by a carbon-based inner frame (6).

7. Method for producing an electrode (8) according to any one of claims 1 to 6, **characterized in that** it successively comprises:
- producing a temporary support (4) comprising said ordered network of pores (1a), impregnated with at least a first carbon-based thermosetting resin,
- forming the outer frame (2) around said temporary support (4), by moulding of a mixture comprising at least a second carbon-based thermosetting resin, and hardening of said mixture,
- slicing the assembly formed by the temporary support (4) surrounded by the outer frame (2),
- heat treatment in an inert atmosphere of said assembly, carbonizing the materials of the assembly,
- depositing a layer of lead or lead-based alloy on all the surfaces of the assembly,
- filling the pores (1a) of the porous structure (1; 1b, 1c) obtained after heat treatment with a lead-based paste constituting the active material of the battery.

8. Method according to claim 7, **characterized in that** the temporary support (4) is made from paper.

9. Method according to one of claims 7 and 8, **characterized in that** the first and second carbon-based thermosetting resins are identical.

10. Method according to any one of claims 7 to 9, **characterized in that** the mixture comprises carbon fibers or particles and a solvent.

11. Method according to any one of claims 7 to 10, **characterized in that** depositing the lead or lead-based alloy layer is achieved by electrodeposition.
